# EUROPEAN PATENT APPLICATION

(11) **EP 4 478 551 A1**
(43) Date of publication of application: **18.12.2024**
(21) Application number: 23211901.6
(22) Date of filing: 24.11.2023
(51) Int. Cl.: H01R 9/26, H01C 7/12, H01T 1/14, H01T 4/06, H01R 11/09, H01T 1/12, H02H 9/04

(54) **SURGE PROTECTIVE DEVICE SYSTEMS AND ASSEMBLIES AND POWER SUPPLY SYSTEMS INCLUDING SAME**

(30) Priority: 15.06.2023 DE 202023103297 U
(71) Applicant: Raycap IP Development LTD, 2012 Strovolos Nicosia (CY)
(72) Inventor: KAMENSEK, Sebastjan, Skofja Loka (SI); MARCUN, Marko, Krize (SI)
(74) Representative: HL Kempner Patentanwälte, Solicitors (England and Wales), Irish Patent Agents Partnerschaft mbB

(57) **Abstract**

A surge protective device (SPD) system for use with an input cable and an output cable of an electrical power supply transmission system includes a base module and an SPD module. The base module is configured as a feed-through terminal block. The base module includes a feed-through circuit including: an input connector configured to connect the input cable; and an output connector configured to connect the output cable and electrically connected to the input connector. The SPD module is configured to be removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The SPD module is a Type 1 or Type 2 Surge Protective Device according to International Electrotechnical Commission (IEC) standard 61643-11:2011 (dated 9 March 2011).

## Description

### Field

The present invention relates to surge protective devices (SPDs) for electrical power transmission lines.

### Background

Frequently, excessive voltage or current is applied across service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges is not acceptable and resulting down time may be very costly.

Typically, sensitive electronic equipment may be protected against transient overvoltages and surge currents using surge protective devices (SPDs). For example, an overvoltage protection device may be installed at a power input of equipment to be protected, which is typically protected against overcurrents when it fails. Typical failure mode of an SPD is a short circuit. The overcurrent protection typically employed is a combination of an internal thermal disconnector to protect the device from overheating due to increased leakage currents and an external fuse to protect the device from higher fault currents. Different SPD technologies may avoid the use of the internal thermal disconnector because, in the event of failure, they change their operation mode to a low ohmic resistance.

In the event of a surge current in a line L (e.g., a voltage line of a three phase electrical power circuit), protection of power system load devices may necessitate providing a current path to ground for the excess current of the surge current. The surge current may generate a transient overvoltage between the line L and the neutral line N (the neutral line N may be conductively coupled to an earth ground PE). Since the transient overvoltage significantly exceeds the operating voltage of the SPD, the SPD will become conductive, allowing the excess current to flow from line L through SPD to the neutral N. Once the surge current has been conducted to neutral N, the overvoltage condition ends and the SPD may become non-conducting again. However, in some cases, one or more SPDs may begin to allow a leakage current to be conducted even at voltages that are lower that the operating voltage of the SPDs. Such conditions may occur in the case of an SPD deteriorating.

Terminal blocks are commonly used to terminate and connect an electrical cable to a circuit or other electrical system via a busbar system.

### Summary

According to some embodiments, a surge protective device (SPD) system for use with an input cable and an output cable of an electrical power supply transmission system includes a base module and an SPD module. The base module is configured as a feed-through terminal block. The base module includes a feed-through circuit including: an input connector configured to connect the input cable; and an output connector configured to connect the output cable and electrically connected to the input connector. The SPD module is configured to be removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The SPD module is a Type 1 or Type 2 Surge Protective Device according to International Electrotechnical Commission (IEC) standard 61643-11:2011 (dated 9 March 2011).

According to some embodiments, the base module is a feed-through terminal block rated according to IEC 60947-1-7:2009 to sustain at least 80 Amps as a continuous load current.

In some embodiments, the SPD module is rated according to IEC 61643-11:2011 for at least 20kA nominal discharge current (In).

In some embodiments, the input connector and the output connector are each configured to accept or receive and electrically connect electrical power transmission cables having a cross-sectional area of 2 mm² or greater.

According to some embodiments, the overvoltage protection component is a varistor.

In some embodiments, the SPD module includes a thermal disconnect mechanism configured to disconnect the varistor in response to overheating of the SPD module.

In some embodiments, the SPD module includes an indicator system configured to provide an alert in response to actuation of the thermal disconnect mechanism.

In some embodiments, the indicator system includes a remote indicator system including a switch, and a remote monitoring connector forming a part of the SPD module.

According to some embodiments, the feed-through circuit includes a conductor member electrically connecting the output connector to the input connector, and the SPD module includes a connector that directly contacts the conductor member to connect the overvoltage protection component to the feed-through circuit.

According to some embodiments, a first portion of the conductor member forms a part of the input connector, and a second portion of the conductor member forms a part of the output connector.

In some embodiments, the input connector and the output connector are spring clamp connectors, and the input connector and the output connector are each provided with a connector operating mechanism including a lever member operable to open the spring clamp connector to receive the input or output cable.

According to some embodiments, the base module is configured to be mounted on a DIN rail.

According to some embodiments, the base module is configured for use with a plurality of pairs of input and output cables, and includes a plurality of feed-through circuits each including: an input connector configured to connect a corresponding input cable; and an output connector configured to connect a corresponding output cable and electrically connected to the respective first input connector. When the SPD system is the protected mode, the SPD module provides overvoltage protection to each of the plurality of feed-through circuits.

In some embodiments, the plurality of feed-through circuits includes a feed-through circuit for each of three phase lines, a neutral line, and a protective earth line.

According to some embodiments, a surge protective device (SPD) system for use with an input cable and an output cable of an electrical power supply transmission system includes a base module and an SPD module. The base module is configured as a feed-through terminal block. The base module includes a feed-through circuit including: an input connector configured to connect the input cable; and an output connector configured to connect the output cable and electrically connected to the input connector. The SPD module is configured to be removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; an unprotected mode, wherein the SPD module is not mounted on the base module and the base module operates as a feed-through terminal block without overvoltage protection from the SPD module. The base module is a feed-through terminal block rated according to IEC 60947-1-7:2009 to sustain at least 80 Amps as a continuous load current.

According to some embodiments, a surge protective device (SPD) system for use with an input cable and an output cable of an electrical power supply transmission system includes a base module and an SPD module. The base module is configured as a feed-through terminal block. The base module includes a feed-through circuit including: an input connector configured to connect the input cable; and an output connector configured to connect the output cable and electrically connected to the input connector. The SPD module is configured to be removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The SPD module is rated according to IEC 61643-11:2011 for at least 20kA nominal discharge current (In).

According to some embodiments, a surge protective device (SPD) system for use with an input cable and an output cable of an electrical power supply transmission system includes a base module and an SPD module. The base module is configured as a feed-through terminal block. The base module includes a feed-through circuit including: an input connector configured to connect the input cable; and an output connector configured to connect the output cable and electrically connected to the input connector. The SPD module is configured to be removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The input connector and the output connector are each configured to accept or receive and electrically connect electrical power transmission cables having a cross-sectional area of 2 mm² or greater.

According to some embodiments, a surge protective device (SPD) system for use with an input cable and an output cable of an electrical power supply transmission system includes a base module and an SPD module. The base module is configured as a feed-through terminal block. The base module includes a feed-through circuit including: an input connector configured to connect the input cable; and an output connector configured to connect the output cable and electrically connected to the input connector. The SPD module is configured to be removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The overvoltage protection component is a varistor. The SPD module includes a thermal disconnect mechanism configured to disconnect the varistor in response to overheating of the SPD module. The SPD module includes an indicator system configured to provide an alert in response to actuation of the thermal disconnect mechanism. The indicator system includes a remote indicator system including: a switch; and a remote monitoring connector forming a part of the SPD module.

According to some embodiments, an electrical power supply system includes an electrical power supply, a surge protective device (SPD) system, an input cable connecting the electrical power supply to the SPD unit, and an output cable connecting the SPD unit to an electrical power load. The SPD system includes a base module and an SPD module. The base module is configured as a feed-through terminal block. The base module includes a feed-through circuit including: an input connector connecting the input cable to the feed-through circuit; and an output connector connecting the output cable to the feed-through circuit and electrically connected to the input connector. The SPD module is removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The SPD module is a Type 1 or Type 2 Surge Protective Device according to International Electrotechnical Commission (IEC) standard 61643-11:2011 (dated 9 March 2011).

According to some embodiments, an electrical power supply system includes an electrical power supply, a surge protective device (SPD) system, an input cable connecting the electrical power supply to the SPD unit, and an output cable connecting the SPD unit to an electrical power load. The SPD system includes a base module and an SPD module. The base module is configured as a feed-through terminal block. The base module includes a feed-through circuit including: an input connector connecting the input cable to the feed-through circuit; and an output connector connecting the output cable to the feed-through circuit and electrically connected to the input connector. The SPD module is removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The base module is a feed-through terminal block rated according to IEC 60947-1-7:2009 to sustain at least 80 Amps as a continuous load current.

According to some embodiments, an electrical power supply system includes an electrical power supply, a surge protective device (SPD) system, an input cable connecting the electrical power supply to the SPD unit, and an output cable connecting the SPD unit to an electrical power load. The SPD system includes a base module and an SPD module. The base module is configured as a feed-through terminal block. The base module includes a feed-through circuit including: an input connector connecting the input cable to the feed-through circuit; and an output connector connecting the output cable to the feed-through circuit and electrically connected to the input connector. The SPD module is removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. Th

SPD module is rated according to IEC 61643-11:2011 for at least 20kA nominal discharge current (In).

According to some embodiments, an electrical power supply system includes an electrical power supply, a surge protective device (SPD) system, an input cable connecting the electrical power supply to the SPD unit, and an output cable connecting the SPD unit to an electrical power load. The SPD system includes a base module and an SPD module. The base module is configured as a feed-through terminal block. The base module includes a feed-through circuit including: an input connector connecting the input cable to the feed-through circuit; and an output connector connecting the output cable to the feed-through circuit and electrically connected to the input connector. The SPD module is removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The input connector and the output connector are each configured to accept or receive and electrically connect electrical power transmission cables having a cross-sectional area of 2 mm² or greater.

According to some embodiments, an electrical power supply system includes an electrical power supply, a surge protective device (SPD) system, an input cable connecting the electrical power supply to the SPD unit, and an output cable connecting the SPD unit to an electrical power load. The SPD system includes a base module and an SPD module. The base module is configured as a feed-through terminal block. The base module includes a feed-through circuit including: an input connector connecting the input cable to the feed-through circuit; and an output connector connecting the output cable to the feed-through circuit and electrically connected to the input connector. The SPD module is removably mounted on the base module. The SPD module includes an SPD circuit including an overvoltage protection component. The SPD system is configured to be used in each of: a protected mode, wherein the SPD module is mounted on the base module and provides overvoltage protection to the feed-through circuit; and an unprotected mode, wherein the SPD module is not mounted on the base module and the base module operates as a feed-through terminal block without overvoltage protection from the SPD module. The overvoltage protection component is a varistor. The SPD module includes a thermal disconnect mechanism configured to disconnect the varistor in response to overheating of the SPD module. The SPD module includes an indicator system configured to provide an alert in response to actuation of the thermal disconnect mechanism. The indicator system includes a remote indicator system including: a switch; and a remote monitoring connector forming a part of the SPD module.

### Brief Description of the Drawings

The accompanying drawings, which form a part of the specification, illustrate embodiments of the present invention.
**FIG. 1** is a front perspective view of a surge protected feedthrough circuit including an SPD system according to some embodiments in a protected mode.
**FIG. 2** is a front perspective view of an unprotected feedthrough circuit including the SPD system a protected mode.
**FIG. 3** is an exploded, rear perspective view of the SPD system of **FIG. 1****.**
**FIG. 4** is an exploded, front perspective view of a base module forming a part of the SPD system of **FIG. 1****.**
**FIG. 5** is a fragmentary, front perspective view of the base module of **FIG. 4****.**
**FIG. 6** is a fragmentary, side view of the SPD system of **FIG. 1****.**
**FIG. 7** is an enlarged, fragmentary, side view of the SPD system of **FIG. 1****.**
**FIG. 8** is a fragmentary, rear perspective view of an SPD module forming a part of the SPD system of **FIG. 1****.**
**FIG. 9** is an exploded, fragmentary, front perspective view of the SPD module of **FIG. 8****.**
**FIG. 10** is a fragmentary, side view of the SPD module of **FIG. 8****.**
**FIG. 11** is a schematic view of an electrical power supply system including the the SPD system of **FIG. 1****.**
**FIG. 12** is a schematic diagram representing the unprotected feedthrough circuit of **FIG. 2****.**
**FIG. 13** is a schematic diagram representing the protected feedthrough circuit of **FIG. 1****.**

### Detailed Description of Embodiments

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It is noted that aspects described with respect to one embodiment may be incorporated in different embodiments although not specifically described relative thereto. That is, all embodiments and/or features of any embodiments can be implemented separately or combined in any way and/or combination. Moreover, other apparatus, methods, and systems according to embodiments of the inventive concept will be or become apparent to one with skill in the art upon review of the following drawings and detailed description. It is intended that all such additional apparatus, methods, and/or systems be included within this description, be within the scope of the present inventive subject matter, and be protected by the accompanying claims.

As used herein, "monolithic" means an object that is a single, unitary piece formed or composed of a material without joints or seams. Alternatively, a unitary object can be a composition composed of multiple parts or components secured together at joints or seams.

Embodiments of the inventive concept are described herein with respect to surge protection for electrical power transmission cables. An "electrical power transmission cable" as used herein means any kind of medium configured to carry electrical power from a power supply to a device or equipment that consumes the electrical power.

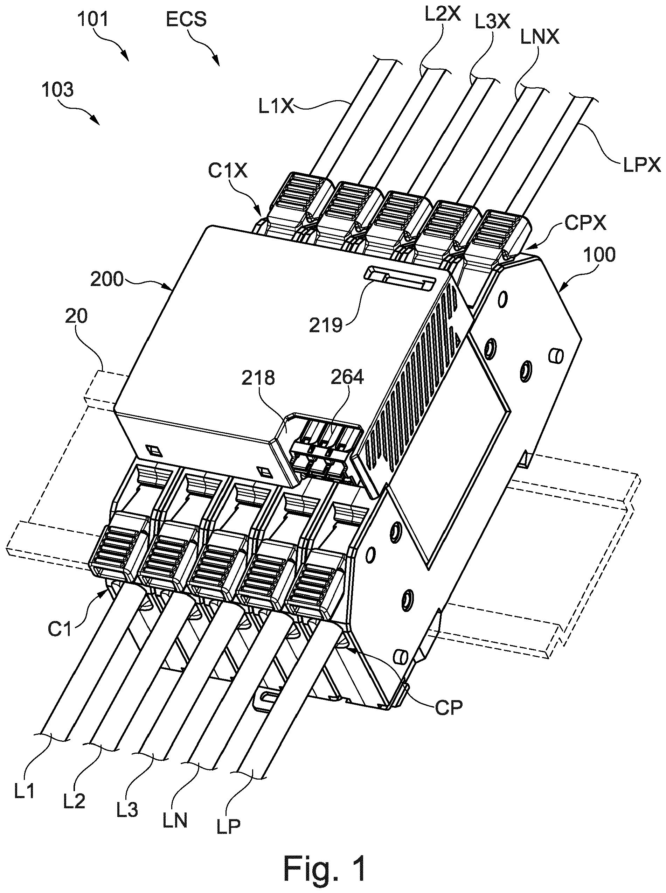

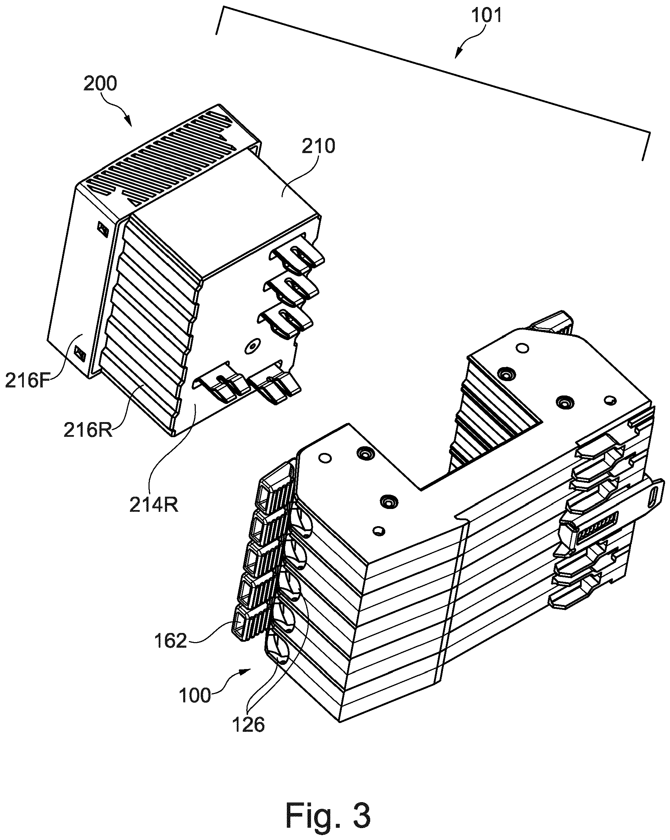

Referring to **FIGS. 1-13****,** a surge protective device (SPD) system **101** according to some embodiments of the inventive concept is shown therein. The SPD system **101** is a feed-through terminal block system including a feed-through terminal block and a user-removable SPD, the SPD including an overvoltage protection component (e.g., a varistor). The feed-through terminal block is a first module and the SPD is a second module that is pluggable into and removable from the first module.

The SPD system **101** is modular and includes an SPD module **200** (as the second module) and a pedestal or base module **100** (as the first module). The base module **100** is a feed-through terminal block. The SPD module **200** is pluggable into and removable from the base module **100.** The SPD module **200** can be removed and replaced in the event an electrical component of the SPD module **200** fails or when overvoltage protection is not needed. When the SPD module **200** is plugged into the base module **100** as described and shown herein, the SPD module **200** and the base module **100** together form an SPD assembly or unit **103.**

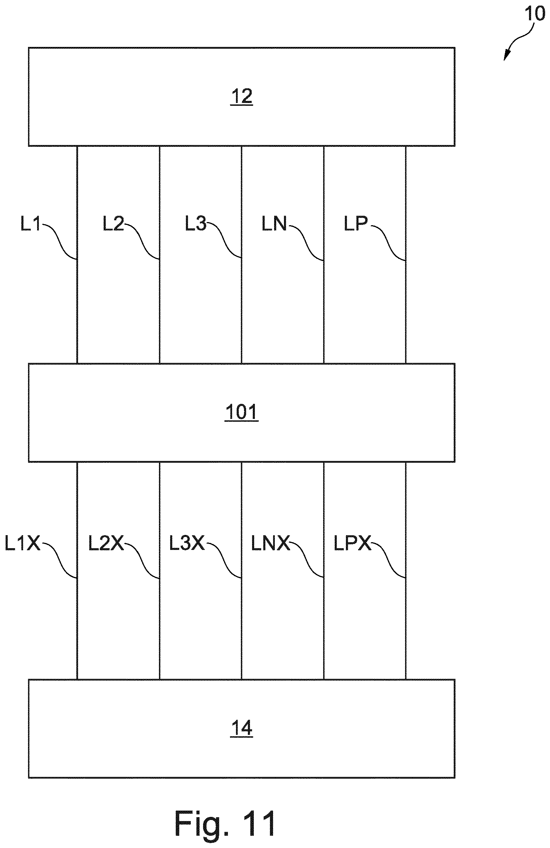

With reference to **FIG. 11****,** the SPD system **101** is configured for use in and, in some embodiments forms a part of, an electrical power supply system **10.** The illustrated electrical power supply system **10** according to some embodiments is a three-phase electrical power supply system. The illustrated electrical power supply system **10** includes a power supply **12,** a power load **14** (*e.g.,* equipment), three feed or input lines or cables **L1, L2, L3** (corresponding to each of the three phases), an input neutral line or cable **LN,** an input ground or protective earth line or cable **LP,** three output lines or cables **L1X, L2X, L3X,** an input neutral line or cable **LNX,** and an output ground or protective earth line or cable **LPX.** The base module **100** is in electrical series between the power supply **12** and the equipment **14** to be protected. The SPD module **200,** when installed on the base module **100,** is connected in electrical parallel with the equipment to be protected and is operative to divert surge current to ground.

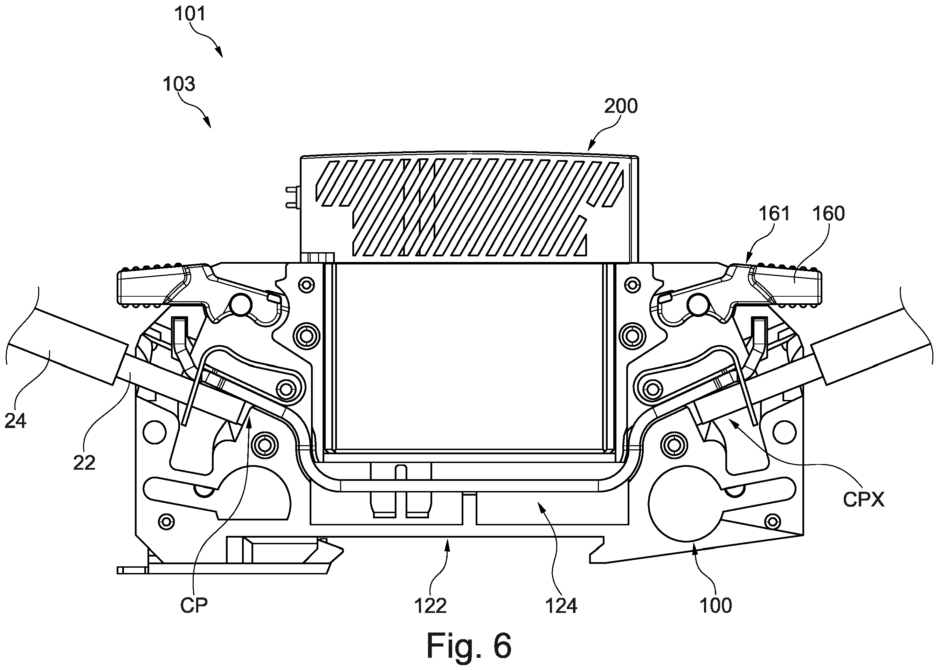

In some embodiments and with reference to **FIG. 6****,** the cables **L1, L2, L3, LN, LP, L1X, L2X, L3X, LNX, LPX** are insulated cables including an electrical conductor **22** and a surrounding insulation layer **24.**

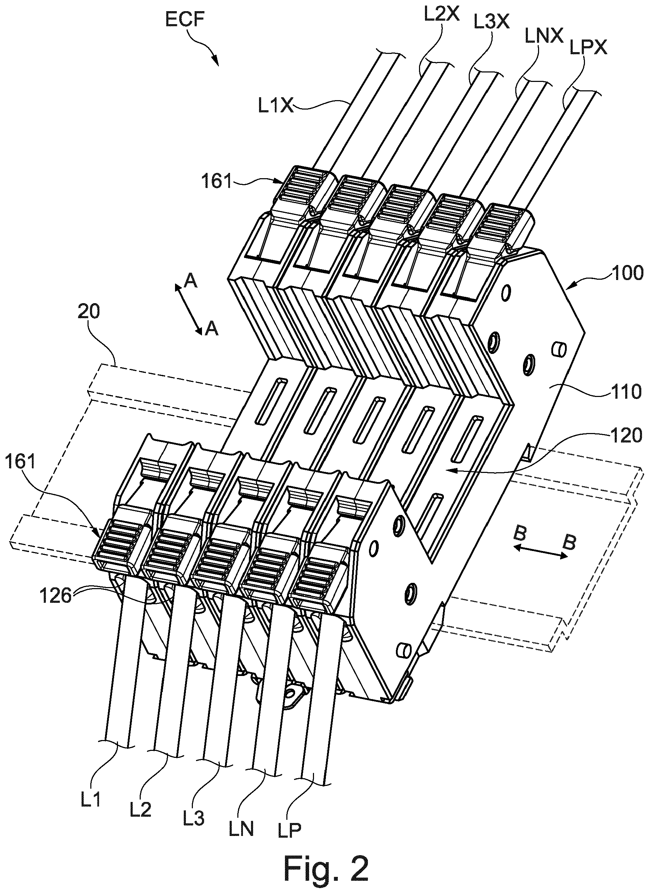

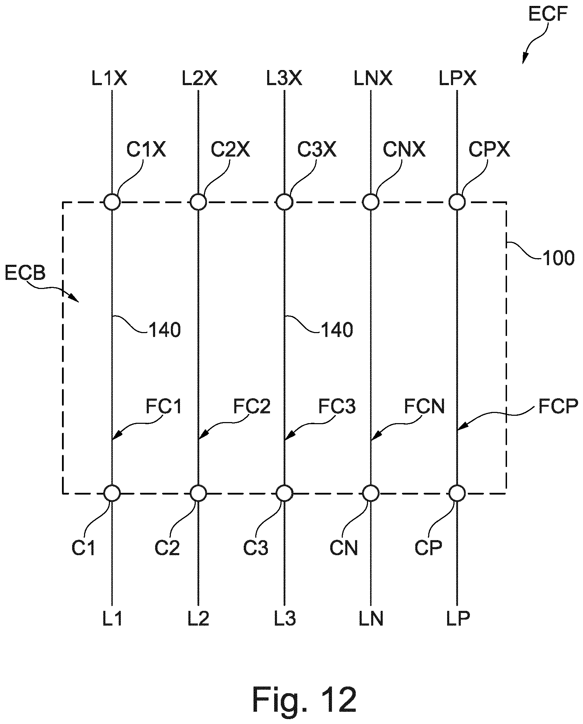

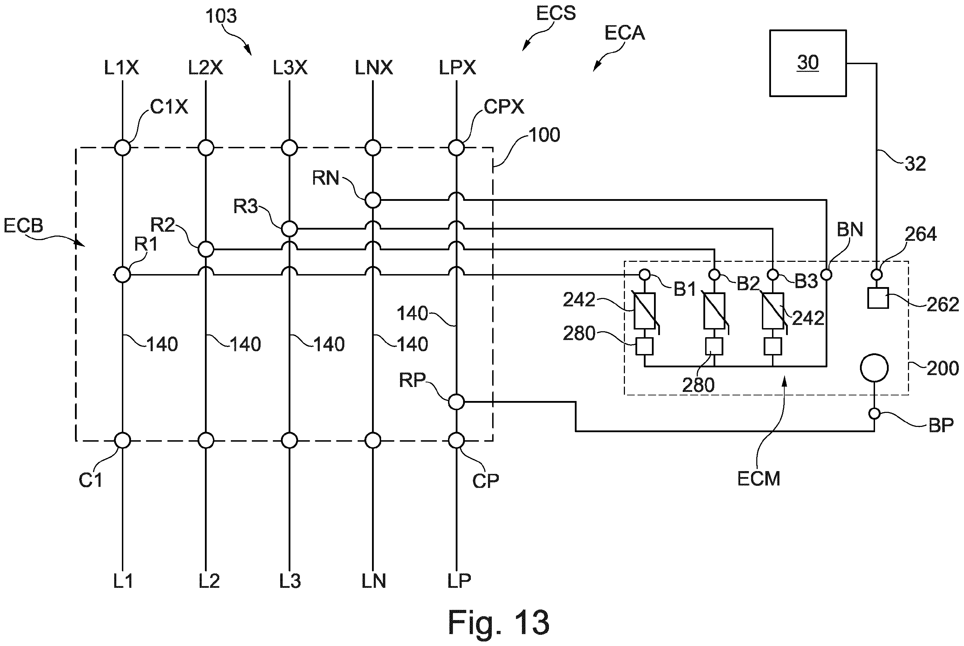

The base module **100 (****FIGS. 2-7****)** includes a base module circuit **ECB (****FIG. 12****).** The base module circuit **ECB** includes five feed-through circuits **FC1, FC2, FC3, FCN, FCP.** The SPD module **200** includes an SPD module circuit **ECM (****FIG. 13****).** The SPD assembly **103** embodies an SPD circuit **ECA (****FIG. 13****)** including both the base module circuit **ECB** and the SPD module circuit **ECM,** which are electrically interconnected in the SPD circuit **ECA.** The SPD module circuit **ECM** as illustrated and described is an example surge protective circuit and other surge protective circuit configurations may be provided instead in accordance with embodiments of the technology.

The base module **100** is adapted to receive and electrically connect the input cables **L1, L2, L3, LN, LP** and output cables **L1X, L2X, L3X, LNX, LPX** with the base module circuit **ECB,** and also with the SPD module circuit **ECM** when the SPD module **200** is installed in the base module **100.** In the illustrative example, the cables **L1, L1X** are connected to a first electrical phase line, the cables **L2, L2X** are connected to a second electrical phase line, the cables **L3, L3X** are connected to a third electrical phase line, the cables **LN, LNX** are connected to a neutral line, and the cables **LP, LPX** are connected to an electrical ground or protective earth line, of a three-phase electrical power transmission system.

When the cables **L1, L2, L3, LN, LP, L1X, L2X, L3X, LNX, LPX** are connected to the base module **100** with the SPD module **200** not installed in the base module **100,** an unprotected installed feedthrough circuit **ECF (****FIGS. 2** and **12****)** is thereby formed. When the cables **L1, L2, L3, LN, LP, L1X, L2X, L3X, LNX, LPX** are connected to the base module **100** with the SPD module **200** installed in the base module **100,** a surge protected installed feedthrough circuit **ECS (****FIGS. 1** and **13****)** is thereby formed.

The SPD system **101** may further include a remote monitoring device **30 (****FIG. 13****).** As discussed herein, the remote monitoring device **30** can be electrically connected to the SPD module **200** to monitor a state of the SPD module **200.** The SPD system **101** and the remote monitoring device **30** together form a remote monitoring system.

The illustrated SPD assembly **103** is configured to be mounted on a DIN rail **20.** However, other mounting and protection configurations may be provided in accordance with some embodiments of the technology.

According to some embodiments and as shown, the base module **100** is configured, sized and shaped for mounting on a support rail **20** (shown in dashed lines). According to some embodiments, the support rail **20** is a DIN (Deutsches Institut für Normung e.V.) rail shown in **FIGS. 1** and **2** and is compliant with corresponding applicable DIN requirements or standards. According to some embodiments, the support rail **20** is a DIN top hat rail having a width of 35 mm and a depth of 7.5 mm. The DIN rail **20** has a lengthwise axis **B-B.** The DIN rail **20** may be secured (*e*.*g*., by screws or other fasteners) to a suitable support structure such as a wall, for example, a rear wall of an electrical service utility cabinet. The base module **100** is removably mountable on the DIN rail **20.** The pluggable SPD module **200** is in turn removably mountable on the base module **100.**

In some embodiments, the maximum dimensions of the SPD assembly **103** are compliant with DIN (Deutsches Institut für Normung e.V.) Standard: DIN EN 60715:2017. In some embodiments, the maximum dimensions of the assembly **103** are compliant with each of these standards.

The base module **100** includes a housing **110,** an DIN rail latching mechanism **102,** five electrical feed-through assemblies **F1, F2, F3, FN, FP,** and a pair of connector operating mechanisms **161** associated with each feed-through assembly **F1, F2, F3, FN, FP.** The base module **100** has a fore-aft or SPD module receiving or plug-in axis **A-A** that extends transversely to and, in some embodiments, substantially perpendicular to the lengthwise axis **B-B** the DIN rail **20.**

According to some embodiments, the housing **110** is formed of an electrically insulating polymeric material. The housing **110** may be formed of any suitable material or materials. In some embodiments, the housing **110** is formed of a rigid polymeric material or metal (*e*.*g*., aluminum). Suitable polymeric materials may include polyamide (PA), polypropylene (PP), polyphenylene sulfide (PPS), or ABS, for example.

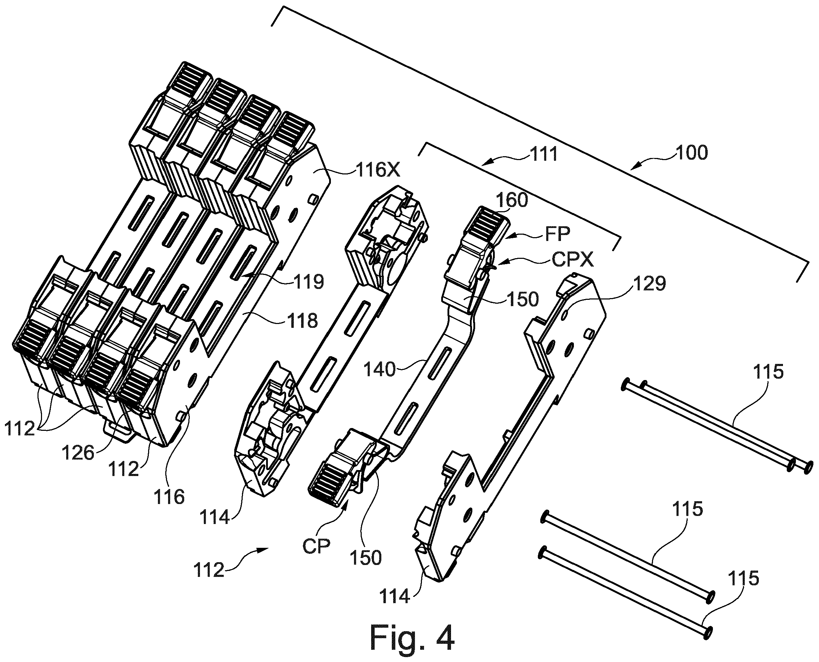

The base housing **110** includes five subhousings **112 (****FIG. 4****)** secured together by screws **115** to form a rigid unit. The subhousings **112** may be substantially identical. One of the subhousings **112** is shown exploded in **FIG. 4** and is described below. It will be appreciated that this description also applies to the other subhousings **112.**

The subhousing **112** includes a pair of opposed housing parts **114** that define an enclosed cavity **124.** The subhousing **112** includes outer sections **116, 116X** and an inner section **118** that define a seat or slot **119.** The slots **119** combine in the housing **110** to define a front-facing module plug-in seat or slot **120.** A DIN rail slot **122** is defined on the rear side. A cable receiving port **126** is defined in each outer section 116, **116X.** One cable port **126** is provided for each of the cables **L1, L2, L3, LN, LP, L1X, L2X, L3X, LNX, LPX.** Two connector receiving ports **128** are defined in the inner section **118.**

Each of the feed-through assemblies **F1, F2, F3, FN, FP** is contained in the cavity **124** of a respective one of the subhousings **112.** Each feed-through assembly **F1, F2, F3, FN, FP** and its subhousing **112** form a subunit **111.** The feed-through assembles **F1, F2, F3, FN,** and **FP** form the feed-through electrical circuits **FC1, FC2, FC3, FCN,** and **FCP,** respectively.

The feed-through assemblies **F1, F2, F3, FN, FP** may be substantially identical. The feed-through assembly **FP** is shown in **FIG. 4** and is described below. It will be appreciated that this description also applies to the other feed-through assemblies **F1, F2, F3, FN.**

The feed-through assembly **FP** includes a main conductor member **140** and a pair of connector springs **150.**

The main conductor member **140** has an input end section **142,** an output end section **142X,** and a bridge section **144.** Two module connection slots **RP** are formed in the bridge section **144.** The feed-through assemblies **F1, F2, F3, FN** include pairs of connection slots **R1, R2, R3, RN,** respectively.

The main conductor member **140** may be formed of any suitable metal. In some embodiments, the main conductor member **140** is formed of copper or steel.

Each connector spring **150** includes a pair of cantilevered spring legs **152, 153** a contact leg **154,** and an opening **156.** Connector spring **150** The connector spring **150** may be formed of any suitable metal. In some embodiments, the connector spring **150** is formed of copper or steel.

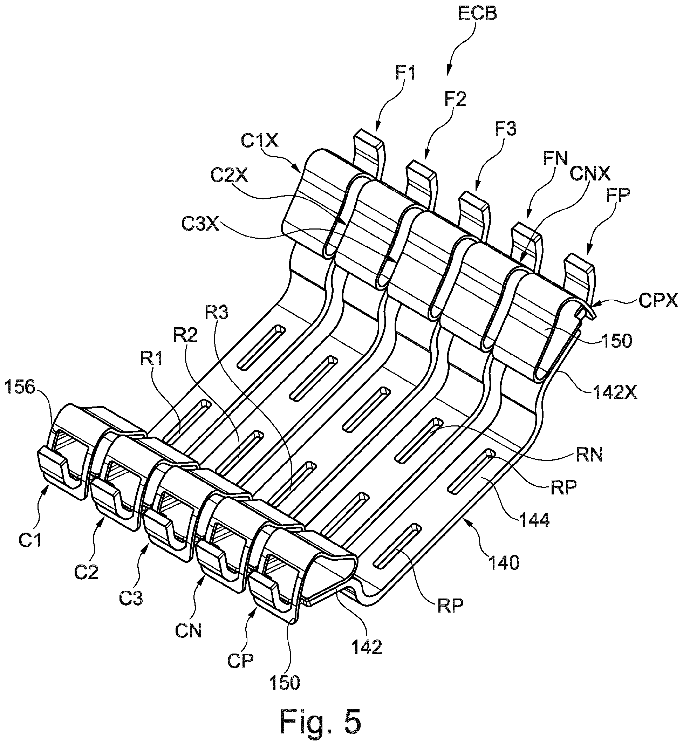

The input end section **142** and the connector spring **150** mounted thereon form an input connector **CP.** The output end section **144** and the connector spring **150** mounted thereon form an input connector **CPX.** Similarly, the end sections of the conductor members **140** of the feed-through assemblies **F1, F2, F3,** and **FN** and the springs **150** mounted thereon form input connectors **C1, C2, C3,** and **CN** and output connectors **C1X, C2X, C3X,** and **CNX,** as shown in **FIG. 5****.**

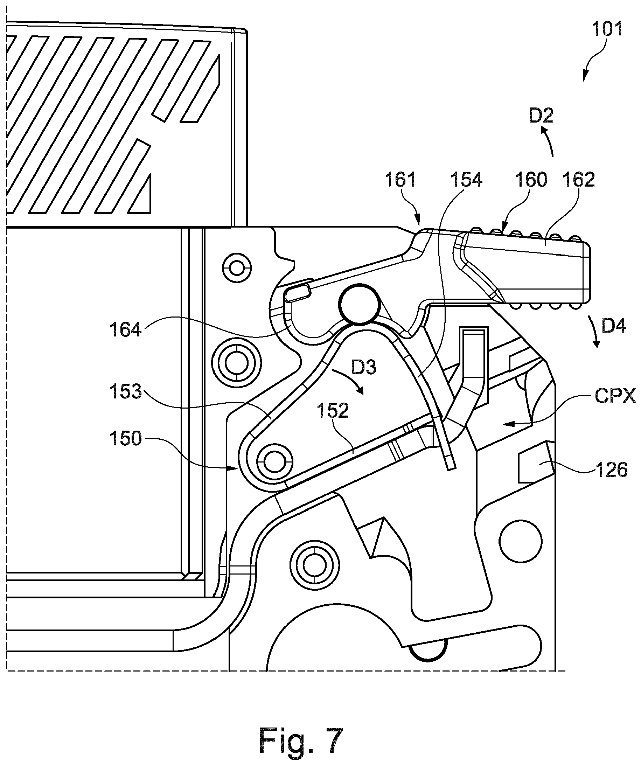

The end section **142** or **144** extends through the opening **156.** The spring leg's **150** outer spring leg **153** is elastically deflectable so that the contact leg **154** can be positioned between a relaxed position as shown in **FIG. 7** and an open or receiving position as shown in **FIG. 6****.**

In some embodiments, the input connectors and output connectors are operated using a connector operating mechanism **161.** A connector operating mechanism **161** is provided for each connector **C1, C2, C3, CN, CP, C1X, C2X, C3X, CNX,** and **CPX.** Each operating mechanism **161** includes a pivot hole **129** and a lever member **160.** The lever member **160** includes a handle section **162** and a bearing section **164.** A driver slot **163** is provide in the handle section **162.**

In use, the cables **L1, L2, L3, LN, LP, L1X, L2X, L3X, LNX, LPX** can be electrically connected and secured by the connectors **C1, C2, C3, CN, CP, C1X, C2X, C3X,** and **CNX, CPX** as follows. The lever member **160** is pivoted in an opening direction **D2** as indicated in **FIG. 7** to an upright, locked open position. By this motion, the cammed surface of the bearing section **164** deflects the spring leg **153** in a direction **D3** to the open position. The bare end of the conductor **22** of the cable is inserted through the port **126** and the opening **156.** The lever member **160** is then displaced in a lever closing direction **D4** so that the bearing section **164** springs back in a direction **D5.** The spring return force of the spring **150** pulls the cable end against the rear side of the end section **142** or **144,** to form an electrical mechanically connection between the cable conductor **22** and the conductor member **140,** as shown in **FIG. 7****.**

The lever member **160** can be pivoted into the open position and/or into the closed position by hand. Alternatively, the operator can insert a tool (e.g., a screwdriver) into the slot **163** to apply additional leverage to the lever member **160.**

The SPD module **200** includes a module housing **210,** an electrical assembly **230,** an indicator system **261,** and three thermal disconnect mechanisms **280.**

The SPD module housing **210** defines an enclosed cavity containing the electrical assembly **230.** The module housing **210** has a rear end **214R,** a rear section **216R** and a front section **216F.** A remote connector recess **218** is defined along an edge of the front section **216F.** An indicator window **219** is defined in the front section **216F.**

According to some embodiments, the housing **210** is formed of an electrically insulating polymeric material. The housing **210** may be formed of any suitable material or materials. In some embodiments, the housing **210** is formed of a rigid polymeric material or metal (*e*.*g*., aluminum). Suitable polymeric materials may include polyamide (PA), polypropylene (PP), polyphenylene sulfide (PPS), or ABS, for example.

With reference to **FIGS. 1** and **8****-10,** the illustrative electrical assembly **230** includes three varistor subassemblies **240** (which serve as overvoltage protection components), a ground busbar **250,** a gas discharge tube (GDT) **254,** and a ground or protective earth (PE) electrode **256.**

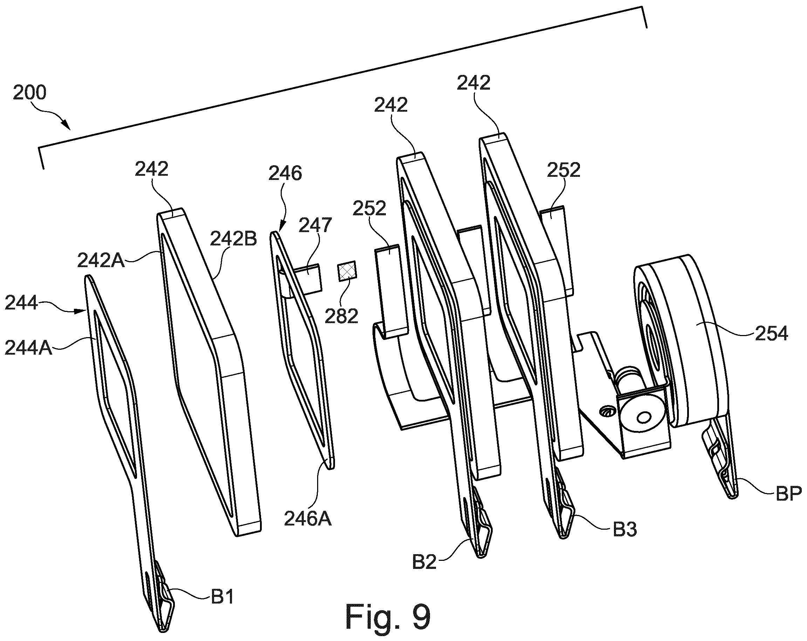

Each varistor subassembly **240** includes an overvoltage clamping element **242,** a metal first or line electrode **244,** a metal second or ground electrode **246** and an electrically insulating cover **247** (*e*.*g*., epoxy). The cover **247** is not shown in **FIG. 9****.** In some embodiments and as illustrated, the overvoltage clamping element is a varistor **242.**

The varistor **242** has opposed contact surfaces **242A, 242B.** Metallization layers may cover the contact surfaces **242A, 242B.**

The thickness of each of the varistor **242** and the dimensions of its contact surfaces **242A, 242B** will depend on the varistor characteristics desired for the particular application.

The varistor material of the varistor **242** may be any suitable material conventionally used for varistors, namely, a material exhibiting a nonlinear resistance characteristic with applied voltage. In some embodiments, the varistor **242** is a metal oxide varistor (MOV). In some embodiments, the resistance becomes very low when a prescribed voltage is exceeded. The varistor material may be a doped metal oxide or silicon carbide, for example. Suitable metal oxides include zinc oxide compounds.

Each line electrode **244** includes a contact portion **244A** and an integral line contact connector **B1, B2** or **B3.** Each ground electrode **246** includes a contact portion **246A,** and an integral tab **247.**

The ground busbar **250** includes three disconnect spring legs **252** and a neutral contact connector **BN.**

The PE electrode **256** includes a contact portion **256A** and a PE contact connector **BP.**

In some embodiments and as illustrated, each of the connectors **B1, B2 B3, BN, BP** is a blade spring connector.

The electrodes **244, 246, 256** and the neutral busbar **250** are electrically conductive. In some embodiments, the electrodes **244, 246, 256** and the neutral busbar **250** are formed of metal. Suitable metals may include nickel brass or copper alloys such as CuSn 6 or Cu - ETP. In some embodiments, each of the electrodes **244, 246, 256** and the neutral busbar **250** is unitary (composite or monolithic) and, in some embodiments, monolithic.

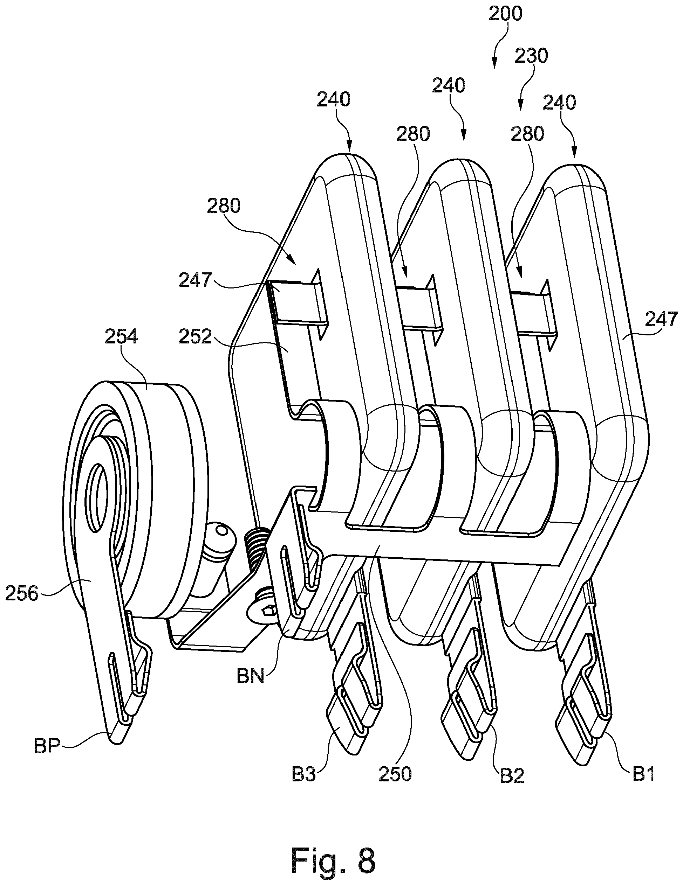

As will be appreciated from **FIGS. 8****,** **9** and **13****,** each connector **B1, B2 B3** is connected to the ground busbar **250** through a varistor **242,** and the connectors **B1, B2, B3, BN** are connected in parallel to the PE connector **BP** through the GDT **254.**

Each thermal disconnector mechanism **280** includes one of the disconnect springs **252,** a mating one of the tabs **247** and a layer of a meltable bonding agent (e.g., solder) **282.** The solders **282** affix the free end of each disconnect spring **252** to its respective tab **247** such that the spring **252** is held in an elastically deflected state.

The indicator system **261** includes a remote indictor assembly **260** and a local indicator assembly **270.**

The remote indicator assembly **260** includes a switch **262** and an electrical connector **264** connected to the switch **262.** The remote indicator connector **264** is mounted in the remote connector recess **218** of the SPD module housing **210.** In some embodiments (for example, as illustrated), the remote indicator connector **264** is accessible from outside the feed-through SPD assembly/unit **103.** In some embodiments, the remote indicator connector **264** is substantially fully disposed within the footprint of the SPD module housing **210.**

The local indicator assembly **270** includes an actuator member **272.** The actuator member **272** includes three primary legs **272A,** a secondary leg **272B** and an indicator portion **272C.** Each leg **272A** is positioned adjacent a respective spring **252.**

As discussed herein, the feed-through SPD system **101** is adapted to be integrated into and provide overvoltage surge protection for an electrical power supply transmission system (e.g., system **10).**

In some embodiments, the SPD module **200** is rated according to IEC 61643-11:2011 (dated 9 March 2011) for at least 20kA nominal discharge current (In).

In some embodiments, the base module **100** is a feed-through terminal block rated according to International Electrotechnical Commission (IEC) standard 60947-1-7:2009 to sustain at least 80 Amps as a continuous load current.

In some embodiments, the SPD module **200** is a Type 1 Surge Protective Device according to IEC 61643-11:2011. In some embodiments, the SPD module **200** is a Type 2 Surge Protective Device according to IEC 61643-11:2011.

In some embodiments, connectors **C1, C2, C3, CN, CP, C1X, C2X, C3X, CNX, CPX** of the base module **100** are configured to accept or receive and electrically connect electrical power transmission cables having a cross-sectional area of 2 mm² or greater. In some embodiments, connectors **C1, C2, C3, CN, CP, C1X, C2X, C3X, CNX, CPX** are configured to accept or receive and electrically connect electrical power transmission cables having a cross-sectional area of 4 mm² or greater. In some embodiments, connectors **C1, C2, C3, CN, CP, C1X, C2X, C3X, CNX, CPX** are configured to accept or receive and electrically connect electrical power transmission cables having a cross-sectional area of 6 mm² or greater.

The feed-through SPD system **101** may be used as follows in accordance with some embodiments. The feed-through SPD system **101** is configured to be mounted on the DIN rail and to protect a three-phase system using a "3+1" protection configuration. However, other mounting and protection configurations may be provided in accordance with some embodiments of the technology.

In some embodiments, the electrical power supply transmission system **10** is a TN-S, TN-C, TT power supply system as defined by the IEC.

In use, the base module **100** is mounted on the DIN rail **20** as shown in **FIGS. 1** and **2****.**

The conductors **22** of the cables **L1, L2, L3, LN, LP, L1X, L2X, L3X, LNX,** and **LPX** are inserted through the cable ports **126** and secured in the connectors **C1, C2, C3, CN, CP, C1X, C2X, C3X, CNX,** and **CPX,** respectively.

The feed-through SPD system **101** may be used in an unprotected feed-through configuration and mode of operation and, alternatively, in a protected feed-through configuration and mode of operation. When the SPD module **200** is not installed in the base module **100,** the feed-through SPD system **101** operates in the unprotected feed-through mode. When the SPD module **200** is installed in the base module **100** and is a ready state, the feed-through SPD system **101** operates in the protected feed-through mode.

The feed-through SPD system **101** is shown in **FIG. 2** in the unprotected feed-through configuration. In the unprotected feed-through configuration, the cables **L1, L2, L3, LN, LP, L1X, L2X, L3X, LNX,** and **LPX** are connected to the base module **100** and the SPD module **200** not operatively installed on the base module **100** (i.e., the connectors **B1, B2, B3, BN, BP** are not mated with the slots **R1, R2, R3, RN, RP** of the feed-through assemblies **F1, F2, F3, FN, FP).**

**FIG. 12** is a schematic view representing an electrical circuit including the base module **100** and the cables **L1, L2, L3, LN, LP, L1X, L2X, L3X, LNX,** and **LPX** in the unprotected feed-through configuration. In the unprotected feed-through configuration or mode, the base module **100** serves as an electrical feed-through terminal or bridge. The lines **L1, L2, L3, LN, LP, L1X, L2X, L3X, LNX,** and **LPX** are not provided with surge protection by the SPD module **200.**

As show in **FIG. 2****,** when the SPD module **200** is not seated in the slot 120, the connector receiving ports **128** remain unoccupied and open. According to some embodiments, the base module **100** is constructed such that the base module **100** in this configuration is compliant with IP Code 20 (IP20) as defined by International Electrotechnical Commission (IEC) standard IEC 60529:1989 + AMD1:1999 + AMD2:2013.

The feed-through SPD system **101** is shown in **FIG. 1** in the alternative protected feed-through configuration. In the protected feed-through configuration, the cables **L1, L2, L3, LN, LP, L1X, L2X, L3X, LNX,** and **LPX** are connected to the base module **100** by the connectors **C1, C2, C3, CN, CP, C1X, C2X, C3X, CNX,** and **CPX,** respectively, and the SPD module **200** is operatively installed on the base module **100,** thereby forming the feed-through SPD assembly/unit **103.** The rear section **216R** is seated in the slot **120** and the connectors **B1, B2, B3, BN, BP** are mated with the slots **R1, R2, R3, RN, RP** of the feed-through assemblies **F1**, **F2, F3, FN, FP).** More particularly, the connectors **B1, B2, B3, BN,** and **BP** are each received in a slot **R1, R2, R3, RN,** and **RP,** respectively, to make direct and reliable electrical contact with between the connector **B1, B2, B3, BN, BP** and the corresponding conductor member **140.** If the connectors **B1, B2, B3, BN, BP** are spring connectors, they are elastically reflected in their inserted, mated condition.

In some embodiments, in the protected feed-through configuration, a monitoring line **32** is connected to the SPD module **200** via the remote monitoring connector **264.** The monitoring line **32** connects the SPD module **200** to the remote monitoring device **30.**

**FIG. 13** is a schematic view representing an electrical circuit including the feed-through SPD assembly/unit **103** and the cables **L1, L2, L3, LN, LP, L1X, L2X, L3X, LNX,** and **LPX** in the protected feed-through configuration.

In protected feed-through configuration or mode, the SPD assembly/unit 103 serves as an electrical feed-through terminal or bridge, and the lines **L1, L2, L3, LN, LP, L1X, L2X, L3X, LNX,** and **LPX** are provided with surge protection by the SPD module 200. The varistors **242** along with the GDT **254** together form a three-phase surge protective or overvoltage protection circuit **ECM.** However, other configurations of protective circuits may be provided in other embodiments (e.g., 3+0, 4+0, 1+0, 1+0, 2+0, 1+1, etc. according to IEC 61643-11:2011 and IEC 61643-12:2020). While the varistors **242** are provided as the overvoltage protection components of the SPD module **200,** in other embodiments overvoltage protection components other than varistors may be used. Such other overvoltage protection components may include spark gaps, diodes, thyristors, etc.

In use, each thermal disconnect mechanism **280** serves as a fail-safe mechanism that is actuated in response to heat generated in the SPD module **200.** In some embodiments, actuation of the thermal disconnect mechanism **280** will in turn actuate the indicator system **261** to alert an operator that the thermal disconnect mechanism **280** has been triggered.

As is well known, a varistor has an innate nominal clamping voltage VNOM (sometimes referred to as the "breakdown voltage" or simply the "varistor voltage") at which the varistor begins to conduct current. Below the VNOM, an ideal varistor will not pass current, but in practice may pass a leakage current. Above the VNOM, the varistor will conduct a current (*i.e.,* a leakage current or a surge current). The VNOM of a varistor is typically specified as the measured voltage across the varistor with a DC current of 1mA.

As is known, a varistor has three modes of operation. In a first normal mode (discussed above), up to a nominal voltage, the varistor is practically an electrical insulator. In a second normal mode (also discussed above), when the varistor is subjected to an overvoltage, the varistor temporarily and reversibly becomes an electrical conductor during the overvoltage condition and returns to the first mode thereafter. In a third mode (the so-called end of life mode), the varistor is effectively depleted and becomes a permanent, non-reversible electrical conductor.

The varistor also has an innate clamping voltage VC (sometimes referred to as simply the "clamping voltage"). The clamping voltage VC is defined as the maximum voltage measured across the varistor when a specified current is applied to the varistor over time according to a standard protocol.

In the absence of an overvoltage condition, each varistor **242** provides high resistance such that no current flows through the varistor **242** as it appears electrically as an open circuit. That is, ordinarily the varistor **242** passes no current. The terminals **244, 246** are electrically isolated from one another by the varistor **242.** In the event of an overcurrent surge event (typically transient; *e*.*g*., lightning strike) or an overvoltage condition or event (typically longer in duration than an overcurrent surge event) exceeding VNOM, the resistance of the varistor **242** decreases rapidly, allowing current to flow through the varistor **242** and create a shunt path for current flow to ground via the connector **BP** and the main conductor **140** of the feed-through assembly **FP.** Normally, the varistors **242** recover from these events without significant overheating of the varistor.

The VNOM of a given varistor begins at a certain value and over time could degrade to a lower effective VNOM value as a result of varistor aging. Typically, a varistor is initially rated for a "maximum continuous operating voltage" (MCOV), indicating that the VNOM of the varistor exceeds the rated MCOV when first placed in service.

Varistor aging (*i.e,* degradation resulting in reduction of the VNOM) can be caused by surge currents (during overvoltage events) or continuous leakage currents (during normal operation of the power system) applied to the varistor in service, as well as by passage of time with the nominal voltage applied on the varistor (rare case, typically caused by low quality varistors). Aging degradation is generally thermally induced.

As a result, in an end of life condition, a fault current will continuously flow through the varistor **242** even in the absence of an overvoltage condition. In this case, the current may continue to flow through the varistor **242,** thereby generating heat from ohmic losses in the varistor **242.** If the condition was permitted to persist, exces heat may be generated in the varistor 242.

Varistors have multiple failure modes. The failure modes include: 1) the varistor fails as a short circuit; and 2) the varistor fails as a linear resistance. The failure of the varistor to a short circuit or to a linear resistance may be caused by the conduction of a single or multiple surge currents of sufficient magnitude and duration or by a single or multiple continuous overvoltage events that will drive a sufficient current through the varistor.

A short circuit failure typically manifests as a localized pinhole or puncture site (herein, "the failure site") extending through the thickness of the varistor. This failure site creates a path for current flow between the two electrodes of a low resistance, but high enough to generate ohmic losses and cause overheating of the device even at low fault currents. Sufficiently large fault current through the varistor can melt the varistor in the region of the failure site and generate an electric arc.

A varistor failure as a linear resistance will cause the conduction of a limited current through the varistor that will result in a buildup of heat. This heat buildup may result in catastrophic thermal runaway and the device temperature may exceed a prescribed maximum temperature. For example, the maximum allowable temperature for the exterior surfaces of the device may be set by code or standard to prevent combustion of adjacent components. If the leakage current is not interrupted at a certain period of time, the overheating will result eventually in the failure of the varistor to a short circuit as defined above.

In some cases, the current through the failed varistor could also be limited by the power system itself (*e.g.,* ground resistance in the system or in photo-voltaic (PV) power source applications where the fault current depends on the power generation capability of the system at the time of the failure) resulting in a progressive build up of temperature, even if the varistor failure is a short circuit. There are cases where there is a limited leakage current flow through the varistor due to extended in time overvoltage conditions due to power system failures, for example. These conditions may lead to temperature build up in the device, such as when the varistor has failed as a linear resistance and could possibly lead to the failure of the varistor either as a linear resistance or as a short circuit as described above.

In some cases, the varistor **242** may assume an "end of life" mode in which the varistor **242** is depleted in full or in part (*i.e,* in an "end of life" state), leading to an end of life failure. When the varistor **242** reaches its end of life, the varistor **242** will become substantially a short circuit with a very low but non-zero ohmic resistance.

As a result, in an end of life condition, a fault current will continuously flow through the varistor **242** even in the absence of an overvoltage condition. In this case, the current may continue to flow through the varistor **242,** thereby generating heat from ohmic losses in the varistor **242 .** If the condition was permitted to persist, the heat generated in the varistor **242** and the SPD module **200** could build up until the SPD module **200** or part thereof melts or explodes. Such an event may be regarded as catastrophic. If the fault current were of sufficient magnitude, the fault current may induce or generate electric arcing through and around the varistor **242** (herein, an "arcing event"). Such an arcing event may rapidly generate additional heat in the SPD module **200.** Such an arcing event may rapidly generate additional heat in the SPD module **200** and/or may cause localized damage to other components of the feed-through SPD assembly/unit **103.**

In the case of the SPD module **200,** each thermal disconnect mechanism **280** is adapted and configured to electrically disconnect the corresponding varistor **242** from the ground line **LPX** (and thereby from the power load) to prevent or reduce the generation of heat in the varistor. In this way, the thermal disconnect mechanism **280** can operate as a switch to prevent overheating and catastrophic failure as described above.

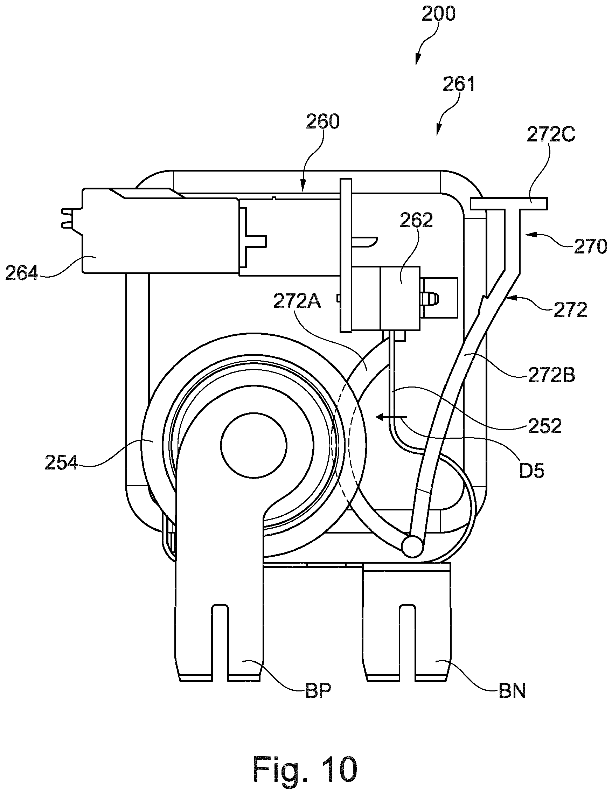

More particularly, during normal operation, the thermal disconnector mechanism **280** remains in a ready position **(****FIGS. 8** and **10****)** with the spring **252** bonded to and in electrical continuity with the tab **247** by the solder **282.** In this normal mode, each varistor **242** is an insulator up to the nominal clamping voltage VNOM. In the case of a surge event and when the varistors **242** is not in an end of life state, the heat generated in the varistor **242** is not sufficient to melt the solder **282.** However, when a varistor fails (as described above) or assumes an end of life state, overheating of one of the varistors **242** will sufficiently heat its solder **282** to cause its solder **282** to melt and release the elastically deflected leg **252** from its tab **247.** The corresponding varistor **242** is thereby disconnected from the ground terminal **BP.** In some embodiments, the remaining legs **252** will remain affixed to their tabs **247** by the solders **282** so that the associated lines continue to be overvoltage protected by their associated varistors **242.**

In some embodiments, the actuation of any of the thermal disconnect mechanisms **280** also actuates the remote indicator assembly **260** and/or the local indicator assembly **270** to signal to an observer that a varistor **242** has failed. In some embodiments, the actuation of any one of the thermal disconnect mechanisms **280** actuates both the remote indicator assembly **260** and the local indicator assembly **270.**

Upon actuation of a thermal disconnect mechanism **280,** the released leg **252** will forcibly displace the legs **272A, 272B** from the ready position **(****FIG. 10****)** in a direction **D5.** This in turn displaces the indicator **272C** into a location visible through the window **219.** This provides a visual alert or indication on the SPD module **200** so that an operator can readily determine that the SPD module **200** has assumed a failed state.

The displacement of the leg **272B** will also actuate or change the state of the remote signaling switch **262.** The change of state of the switch **262** is transmitted to the remote monitoring device **30** via the remote signal connector **264.**

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

It will be understood that, although the terms "first," "second," etc. may be used herein to describe various elements, these elements should not be limited by these terms. These terms are only used to distinguish one element from another. Thus, a first element could be termed a second element without departing from the teachings of the inventive subject matter.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

Aspects and embodiments of the invention will be further understood with reference to the following non-limiting numbered clauses:
1. A surge protective device (SPD) system for use with an input cable and an output cable of an electrical power supply transmission system, the SPD system comprising:
   a base module configured as a feed-through terminal block, the base module including a feed-through circuit including:
      an input connector configured to connect the input cable; and
      an output connector configured to connect the output cable and electrically connected to the input connector; and
   an SPD module configured to be removably mounted on the base module, the SPD module including an SPD circuit including an overvoltage protection component;
   wherein the SPD system is configured to be used in each of:
      a protected mode, wherein the SPD module is mounted on the base module and provides overvoltage protection to the feed-through circuit; and
      an unprotected mode, wherein the SPD module is not mounted on the base module and the base module operates as a feed-through terminal block without overvoltage protection from the SPD module; and
   wherein the SPD module is a Type 1 or Type 2 Surge Protective Device according to International Electrotechnical Commission (IEC) standard 61643-11:2011 (dated 9 March 2011).
2. The SPD system of Clause 1 wherein the base module is a feed-through terminal block rated according to IEC 60947-1-7:2009 to sustain at least 80 Amps as a continuous load current.
3. The SPD system of any one of Clauses 1 to 2 wherein the SPD module is rated according to IEC 61643-11:2011 for at least 20kA nominal discharge current (In).
4. The SPD system of any one of Clauses 1 to 3 wherein the input connector and the output connector are each configured to accept or receive and electrically connect electrical power transmission cables having a cross-sectional area of 2 mm² or greater.
5. The SPD system of any one of Clauses 1 to 4 wherein the overvoltage protection component is a varistor.
6. The SPD system of Clause 5 wherein the SPD module includes a thermal disconnect mechanism configured to disconnect the varistor in response to overheating of the SPD module.
7. The SPD system of Clause 6 wherein the SPD module includes an indicator system configured to provide an alert in response to actuation of the thermal disconnect mechanism.
8. The SPD system of Clause 7 wherein the indicator system includes a remote indicator system including:
   a switch; and
   a remote monitoring connector forming a part of the SPD module.
9. The SPD system of any one of Clauses 1 to 8 wherein:
   the feed-through circuit includes a conductor member electrically connecting the output connector to the input connector; and
   the SPD module includes a connector that directly contacts the conductor member to connect the overvoltage protection component to the feed-through circuit.
10. The SPD system of any one of Clauses 1 to 9 wherein:
   a first portion of the conductor member forms a part of the input connector; and
   a second portion of the conductor member forms a part of the output connector.
11. The SPD system of Clause 10 wherein:
   the input connector and the output connector are spring clamp connectors; and
   the input connector and the output connector are each provided with a connector operating mechanism including a lever member operable to open the spring clamp connector to receive the input or output cable.
12. The SPD system of any one of Clauses 1 to 11 wherein the base module is configured to be mounted on a DIN rail.
13. The SPD system of any one of Clauses 1 to 12 wherein:
   the base module is configured for use with a plurality of pairs of input and output cables, and includes a plurality of feed-through circuits each including:
      an input connector configured to connect a corresponding input cable; and
      an output connector configured to connect a corresponding output cable and electrically connected to the respective first input connector; and
   when the SPD system is the protected mode, the SPD module provides overvoltage protection to each of the plurality of feed-through circuits.
14. The SPD system of any one of Clauses 1 to 13 wherein the plurality of feed-through circuits includes a feed-through circuit for each of three phase lines, a neutral line, and a protective earth line.
15. A surge protective device (SPD) system for use with an input cable and an output cable of an electrical power supply transmission system, the SPD system comprising:
   a base module configured as a feed-through terminal block, the base module including a feed-through circuit including:
      an input connector configured to connect the input cable; and
      an output connector configured to connect the output cable and electrically connected to the input connector; and
   an SPD module configured to be removably mounted on the base module, the SPD module including an SPD circuit including an overvoltage protection component;
   wherein the SPD system is configured to be used in each of:
      a protected mode, wherein the SPD module is mounted on the base module and provides overvoltage protection to the feed-through circuit; and
      an unprotected mode, wherein the SPD module is not mounted on the base module and the base module operates as a feed-through terminal block without overvoltage protection from the SPD module; and
   wherein the base module is a feed-through terminal block rated according to IEC 60947-1-7:2009 to sustain at least 80 Amps as a continuous load current.
16. A surge protective device (SPD) system for use with an input cable and an output cable of an electrical power supply transmission system, the SPD system comprising:
   a base module configured as a feed-through terminal block, the base module including a feed-through circuit including:
      an input connector configured to connect the input cable; and
      an output connector configured to connect the output cable and electrically connected to the input connector; and
   an SPD module configured to be removably mounted on the base module, the SPD module including an SPD circuit including an overvoltage protection component;
   wherein the SPD system is configured to be used in each of:
      a protected mode, wherein the SPD module is mounted on the base module and provides overvoltage protection to the feed-through circuit; and
      an unprotected mode, wherein the SPD module is not mounted on the base module and the base module operates as a feed-through terminal block without overvoltage protection from the SPD module; and
   wherein the SPD module is rated according to IEC 61643-11:2011 for at least 20kA nominal discharge current (In).
17. A surge protective device (SPD) system for use with an input cable and an output cable of an electrical power supply transmission system, the SPD system comprising:
   a base module configured as a feed-through terminal block, the base module including a feed-through circuit including:
      an input connector configured to connect the input cable; and
      an output connector configured to connect the output cable and electrically connected to the input connector; and
   an SPD module configured to be removably mounted on the base module, the SPD module including an SPD circuit including an overvoltage protection component;
   wherein the SPD system is configured to be used in each of:
      a protected mode, wherein the SPD module is mounted on the base module and provides overvoltage protection to the feed-through circuit; and
      an unprotected mode, wherein the SPD module is not mounted on the base module and the base module operates as a feed-through terminal block without overvoltage protection from the SPD module; and
   wherein the input connector and the output connector are each configured to accept or receive and electrically connect electrical power transmission cables having a cross-sectional area of 2 mm² or greater.
18. A surge protective device (SPD) system for use with an input cable and an output cable of an electrical power supply transmission system, the SPD system comprising:
   a base module configured as a feed-through terminal block, the base module including a feed-through circuit including:
      an input connector configured to connect the input cable; and
      an output connector configured to connect the output cable and electrically connected to the input connector; and
   an SPD module configured to be removably mounted on the base module, the SPD module including an SPD circuit including an overvoltage protection component;
   wherein the SPD system is configured to be used in each of:
      a protected mode, wherein the SPD module is mounted on the base module and provides overvoltage protection to the feed-through circuit; and
      an unprotected mode, wherein the SPD module is not mounted on the base module and the base module operates as a feed-through terminal block without overvoltage protection from the SPD module; and
   wherein:
      the overvoltage protection component is a varistor;
      the SPD module includes a thermal disconnect mechanism configured to disconnect the varistor in response to overheating of the SPD module;
      the SPD module includes an indicator system configured to provide an alert in response to actuation of the thermal disconnect mechanism; and
      the indicator system includes a remote indicator system including:
         a switch; and
         a remote monitoring connector forming a part of the SPD module.
19. An electrical power supply system comprising:
   an electrical power supply;
   a surge protective device (SPD) system;
   an input cable connecting the electrical power supply to the SPD unit; and
   an output cable connecting the SPD unit to an electrical power load;
   wherein the SPD system includes:
      a base module configured as a feed-through terminal block, the base module including a feed-through circuit including:
      an input connector connecting the input cable to the feed-through circuit; and
      an output connector connecting the output cable to the feed-through circuit and electrically connected to the input connector; and
      an SPD module removably mounted on the base module, the SPD module including an SPD circuit including an overvoltage protection component;
      wherein the SPD system is configured to be used in each of:
         a protected mode, wherein the SPD module is mounted on the base module and provides overvoltage protection to the feed-through circuit; and
         an unprotected mode, wherein the SPD module is not mounted on the base module and the base module operates as a feed-through terminal block without overvoltage protection from the SPD module; and
      wherein the SPD module is a Type 1 or Type 2 Surge Protective Device according to International Electrotechnical Commission (IEC) standard 61643-11:2011 (dated 9 March 2011).
20. An electrical power supply system comprising:
   an electrical power supply;
   a surge protective device (SPD) system;
   an input cable connecting the electrical power supply to the SPD unit; and
   an output cable connecting the SPD unit to an electrical power load;
   wherein the SPD system includes:
      a base module configured as a feed-through terminal block, the base module including a feed-through circuit including:
         an input connector connecting the input cable to the feed-through circuit; and
         an output connector connecting the output cable to the feed-through circuit and electrically connected to the input connector; and an SPD module removably mounted on the base module, the SPD module including an SPD circuit including an overvoltage protection component;
      wherein the SPD system is configured to be used in each of:
         a protected mode, wherein the SPD module is mounted on the base module and provides overvoltage protection to the feed-through circuit; and
         an unprotected mode, wherein the SPD module is not mounted on the base module and the base module operates as a feed-through terminal block without overvoltage protection from the SPD module; and
   wherein the base module is a feed-through terminal block rated according to IEC 60947-1-7:2009 to sustain at least 80 Amps as a continuous load current.
21. An electrical power supply system comprising:
   an electrical power supply;
   a surge protective device (SPD) system;
   an input cable connecting the electrical power supply to the SPD unit; and
   an output cable connecting the SPD unit to an electrical power load;
   wherein the SPD system includes:
      a base module configured as a feed-through terminal block, the base module including a feed-through circuit including:
         an input connector connecting the input cable to the feed-through circuit; and
         an output connector connecting the output cable to the feed-through circuit and electrically connected to the input connector; and
      an SPD module removably mounted on the base module, the SPD module including an SPD circuit including an overvoltage protection component;
      wherein the SPD system is configured to be used in each of:
         a protected mode, wherein the SPD module is mounted on the base module and provides overvoltage protection to the feed-through circuit; and
         an unprotected mode, wherein the SPD module is not mounted on the base module and the base module operates as a feed-through terminal block without overvoltage protection from the SPD module; and
   wherein the SPD module is rated according to IEC 61643-11:2011 for at least 20kA nominal discharge current (In).
22. An electrical power supply system comprising:
   an electrical power supply;
   a surge protective device (SPD) system;
   an input cable connecting the electrical power supply to the SPD unit; and
   an output cable connecting the SPD unit to an electrical power load;
   wherein the SPD system includes:
      a base module configured as a feed-through terminal block, the base module including a feed-through circuit including:
         an input connector connecting the input cable to the feed-through circuit; and
         an output connector connecting the output cable to the feed-through circuit and electrically connected to the input connector; and
      an SPD module removably mounted on the base module, the SPD module including an SPD circuit including an overvoltage protection component;
      wherein the SPD system is configured to be used in each of:
         a protected mode, wherein the SPD module is mounted on the base module and provides overvoltage protection to the feed-through circuit; and
         an unprotected mode, wherein the SPD module is not mounted on the base module and the base module operates as a feed-through terminal block without overvoltage protection from the SPD module; and
   wherein the input connector and the output connector are each configured to accept or receive and electrically connect electrical power transmission cables having a cross-sectional area of 2 mm² or greater.
23. An electrical power supply system comprising:
   an electrical power supply;
   a surge protective device (SPD) system;
   an input cable connecting the electrical power supply to the SPD unit; and
   an output cable connecting the SPD unit to an electrical power load;
   wherein the SPD system includes:
      a base module configured as a feed-through terminal block, the base module including a feed-through circuit including:
         an input connector connecting the input cable to the feed-through circuit; and
         an output connector connecting the output cable to the feed-through circuit and electrically connected to the input connector; and
      an SPD module removably mounted on the base module, the SPD module including an SPD circuit including an overvoltage protection component;
      wherein the SPD system is configured to be used in each of:
         a protected mode, wherein the SPD module is mounted on the base module and provides overvoltage protection to the feed-through circuit; and
         an unprotected mode, wherein the SPD module is not mounted on the base module and the base module operates as a feed-through terminal block without overvoltage protection from the SPD module; and
   wherein:
      the overvoltage protection component is a varistor;
      the SPD module includes a thermal disconnect mechanism configured to disconnect the varistor in response to overheating of the SPD module;
      the SPD module includes an indicator system configured to provide an alert in response to actuation of the thermal disconnect mechanism; and
      the indicator system includes a remote indicator system including:
         a switch; and
         a remote monitoring connector forming a part of the SPD module.

Many alterations and modifications may be made by those having ordinary skill in the art, given the benefit of present disclosure, without departing from the spirit and scope of the invention. Therefore, it must be understood that the illustrated embodiments have been set forth only for the purposes of example, and that it should not be taken as limiting the invention as defined by the following claims. The following claims, therefore, are to be read to include not only the combination of elements which are literally set forth but all equivalent elements for performing substantially the same function in substantially the same way to obtain substantially the same result. The claims are thus to be understood to include what is specifically illustrated and described above, what is conceptually equivalent, and also what incorporates the essential idea of the invention.

## Claims

1. A surge protective device (SPD) system for use with an input cable and an output cable of an electrical power supply transmission system, the SPD system comprising:
a base module configured as a feed-through terminal block, the base module including a feed-through circuit including:
an input connector configured to connect the input cable; and
an output connector configured to connect the output cable and electrically connected to the input connector; and
an SPD module configured to be removably mounted on the base module, the SPD module including an SPD circuit including an overvoltage protection component;
wherein the SPD system is configured to be used in each of:
a protected mode, wherein the SPD module is mounted on the base module and provides overvoltage protection to the feed-through circuit; and
an unprotected mode, wherein the SPD module is not mounted on the base module and the base module operates as a feed-through terminal block without overvoltage protection from the SPD module; and
wherein the SPD module is a Type 1 or Type 2 Surge Protective Device according to International Electrotechnical Commission (IEC) standard 61643-11:2011 (dated 9 March 2011).

2. The SPD system of Claim 1 wherein the base module is a feed-through terminal block rated according to IEC 60947-1-7:2009 to sustain at least 80 Amps as a continuous load current.

3. The SPD system of any one of Claims 1 to 2 wherein the SPD module is rated according to IEC 61643-11:2011 for at least 20kA nominal discharge current (In).

4. The SPD system of any one of Claims 1 to 3 wherein the input connector and the output connector are each configured to accept or receive and electrically connect electrical power transmission cables having a cross-sectional area of 2 mm² or greater.

5. The SPD system of any one of Claims 1 to 4 wherein the overvoltage protection component is a varistor.

6. The SPD system of Claim 5 wherein the SPD module includes a thermal disconnect mechanism configured to disconnect the varistor in response to overheating of the SPD module.

7. The SPD system of Claim 6 wherein the SPD module includes an indicator system configured to provide an alert in response to actuation of the thermal disconnect mechanism.

8. The SPD system of Claim 7 wherein the indicator system includes a remote indicator system including:
a switch; and
a remote monitoring connector forming a part of the SPD module.

9. The SPD system of any one of Claims 1 to 8 wherein:
the feed-through circuit includes a conductor member electrically connecting the output connector to the input connector; and
the SPD module includes a connector that directly contacts the conductor member to connect the overvoltage protection component to the feed-through circuit.

10. The SPD system of any one of Claims 1 to 9 wherein:
a first portion of the conductor member forms a part of the input connector; and
a second portion of the conductor member forms a part of the output connector.

11. The SPD system of Claim 10 wherein:
the input connector and the output connector are spring clamp connectors; and
the input connector and the output connector are each provided with a connector operating mechanism including a lever member operable to open the spring clamp connector to receive the input or output cable.

12. The SPD system of any one of Claims 1 to 11 wherein the base module is configured to be mounted on a DIN rail.

13. The SPD system of any one of Claims 1 to 12 wherein:
the base module is configured for use with a plurality of pairs of input and output cables, and includes a plurality of feed-through circuits each including:
an input connector configured to connect a corresponding input cable; and
an output connector configured to connect a corresponding output cable and electrically connected to the respective first input connector; and
when the SPD system is the protected mode, the SPD module provides overvoltage protection to each of the plurality of feed-through circuits.

14. The SPD system of any one of Claims 1 to 13 wherein the plurality of feed-through circuits includes a feed-through circuit for each of three phase lines, a neutral line, and a protective earth line.

15. An electrical power supply system comprising:
an electrical power supply;
a surge protective device (SPD) system;
an input cable connecting the electrical power supply to the SPD unit; and
an output cable connecting the SPD unit to an electrical power load;
wherein the SPD system includes:
a base module configured as a feed-through terminal block, the base module including a feed-through circuit including:
an input connector connecting the input cable to the feed-through circuit; and
an output connector connecting the output cable to the feed-through circuit and electrically connected to the input connector; and
an SPD module removably mounted on the base module, the SPD module including an SPD circuit including an overvoltage protection component;
wherein the SPD system is configured to be used in each of:
a protected mode, wherein the SPD module is mounted on the base module and provides overvoltage protection to the feed-through circuit; and
an unprotected mode, wherein the SPD module is not mounted on the base module and the base module operates as a feed-through terminal block without overvoltage protection from the SPD module; and
wherein the SPD module is a Type 1 or Type 2 Surge Protective Device according to International Electrotechnical Commission (IEC) standard 61643-11:2011 (dated 9 March 2011).
